Europäisches Patentamt

European Patent Office

Office européen des brevets

(11) Numéro de publication : **0 298 285 B1**

(12) # FASCICULE DE BREVET EUROPEEN

(45) Date de publication du fascicule du brevet :
24.04.91 Bulletin 91/17

(51) Int. Cl.⁵ : **B23C 5/22**

(21) Numéro de dépôt : **88109605.1**

(22) Date de dépôt : **16.06.88**

(54) **Fraise à plaquettes de coupe amovibles.**

(30) Priorité : 25.06.87 CH 2401/87

(43) Date de publication de la demande :
**11.01.89 Bulletin 89/02**

(45) Mention de la délivrance du brevet :
**24.04.91 Bulletin 91/17**

(84) Etats contractants désignés :
**AT BE DE ES FR GB GR IT LU NL SE**

(56) Documents cités :
**EP-A- 0 239 045
DE-A- 3 425 699
FR-A- 2 276 892**

(73) Titulaire : **STELLRAM S.A.
Route de l'Etraz
CH-1260 Nyon, Vaud (CH)**
Titulaire : **AEROSPATIALE Société Nationale
Industrielle
37, Boulevard de Montmorency
F-75781 Paris Cédex 16 (FR)**

(72) Inventeur : **AEBI, Gilbert
Route de Nyon
CH-1261 TRELEX (CH)**
Inventeur : **RAYE, Pierre
Chemin du Vernay 2
CH-1196 GLAND (CH)**
Inventeur : **DAVID, Maurice, Jean, Armand
La Mulotière 1, 16, rue Georges Meynieu
F-44300 NANTES (FR)**
Inventeur : **MARIANNEAU, Michel, Emile,
Alcide
6, rue des Mésanges
F-44620 LA MONTAGNE (FR)**

(74) Mandataire : **Micheli & Cie
Rue de Genève 122, Case Postale 61
CH-1226 Genève-Thonex (CH)**

## Description

La présente invention concerne selon les revendications 1 et 8, une fraise à plaquettes de coupe amovibles, dite fraise "de pocketing", ainsi que les plaquettes de coupe destinées·à être utilisées avec cette fraise. Plus particulièrement, ce type de fraise dite "de pocketing" permet, en plus du rainurage et du contournage conventionnels, la pénétration dans la matière à usiner par la combinaison de son déplacement axial et du mouvement de la pièce selon au moins un des axes de la table.

On connaît déjà des fraises à plaquettes brasées, présentant un angle de coupe radial variable, un angle de dépouille constant et un angle de taillant variable sur toute la hauteur de coupe, et qui sont généralement utilisées pour des opérations de finition en contournage, de dressage ou de rainurage. Toutefois, ces fraises présentent l'inconvénient de nécessiter des opérations de réaffûtage avec diminution du diamètre nominal ; en outre, en cas de casse accidentelle d'une plaquette, la réparation d'une telle fraise est coûteuse puisqu'elle nécessite un débrasage, un brasage et un affûtage. Enfin, il est nécessaire de disposer de plusieurs fraises différentes pour l'usinage de matières différentes. D'autre part, il est fait référence ici également au document intercalaire EP-A-0239045 des mêmes titulaires, qui est compris dans l'état de la technique considéré au sens de l'art. 54 (3) (BE).

Le but de cette invention consiste donc à fournir une fraise à plaquettes de coupe amovibles qui obvie aux inconvénients précités des fraises connues et qui soit de plus adaptée à des travaux de "pocketing". Ce but est atteint par la fraise selon l'invention, qui présente les caractéristiques définies dans la revendication 1.

Un autre objet de cette invention consiste en une plaquette de coupe destinée à être utilisée avec la fraise précitée selon l'invention, et qui présente les caractéristiques énoncées dans la revendication 8.

Le dessin annexé illustre schématiquement et à titre d'exemple une forme d'exécution de la fraise et de la plaquette de coupe selon l'invention.

La figure 1 est une vue générale en perspective d'une fraise selon l'invention avec plaquettes de coupe amovibles.

Les figures 2 et 4 sont des vues latérales, selon deux positions différentes, de la fraise selon la figure 1, et la figure 3 en est une vue en bout de la face frontale.

Les figures 5, 6 et 7 sont des vues respectivement de côté, en coupe transversale et en plan d'une plaquette de coupe selon l'invention.

Les figures 8 et 9 sont des vues en plan de deux variantes de la portion de pointe d'une plaquette de coupe selon l'invention.

Les figures 10a, 10b et 10c sont des vues partielles en coupe selon les lignes a, b et c de la figure 4.

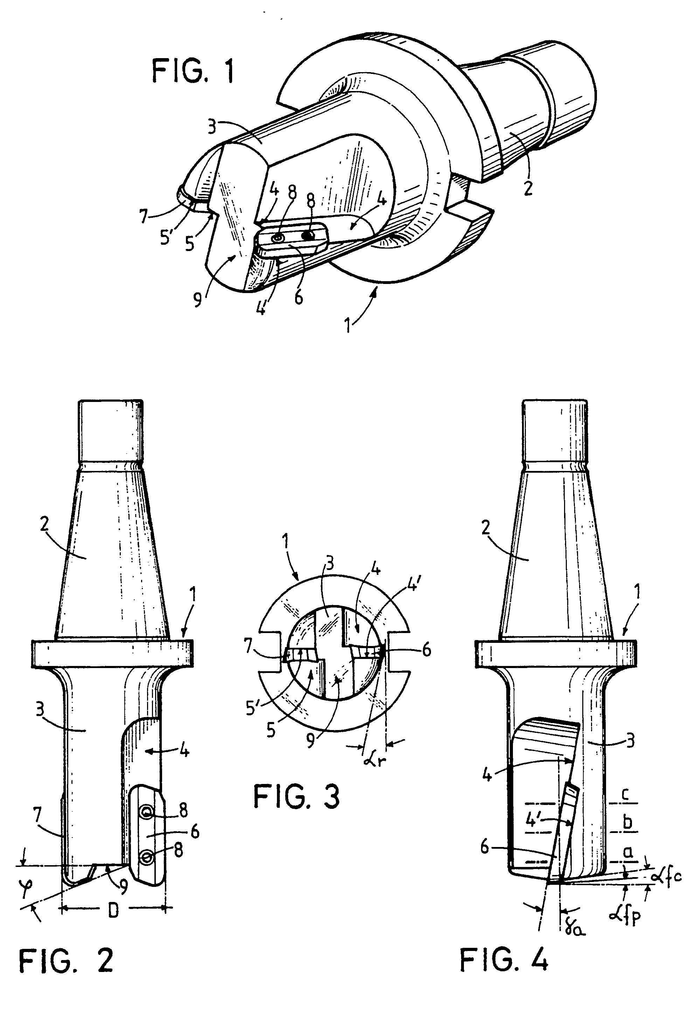

La forme d'exécution de la fraise selon l'invention, illustrée à titre d'exemple sur les figures 1 à 4, comporte un corps 1 présentant d'un côté une partie 2, par exemple de forme conique, destinée à la fixation de ce corps sur le mandrin d'une machine-outil, et de l'autre côté une partie antérieure 3, qui présente deux goujures 4, 5 comprenant chacune un logement 4', 5' destiné à recevoir en position de service une plaquette de coupe 6, 7.

Le fond de chaque logement 4', 5' fait avec l'axe longitudinal un angle d'hélice, correspondant à l'angle de positionnement axial $\gamma_a$ de la plaquette sur la fraise, qui ne doit pas être nul et qui est généralement compris entre 2 et 20°.

Chaque plaquette de coupe 6, 7 est fixée de manière amovible dans le logement 4', 5' prévu dans chaque goujure 4, 5, ici au moyen de deux vis 8, disposées de telle sorte qu'elles tendent à pousser la plaquette contre les parois dudit logement.

La partie antérieure du corps de fraise 1 présente encore un dégagement frontal 9. Ce dégagement est prévu de telle sorte qu'il permette un angle de pénétration $\varphi$ dans la matière à usiner qui soit compris généralement entre 5 et 30°. Cet angle de pénétration $\varphi$ dépend d'une part du diamètre de la fraise et d'autre part des dimensions des plaquettes de coupe ainsi que de leur angle et/ou forme de pointe.

A titre d'exemples uniquement, la fraise peut présenter des diamètres (D) de 40 à 60 mm, et à chaque diamètre correspondant des angles caractéristiques préférés, qui sont les suivants :

| D (mm) | 40 | 50 | 60 |
|--------|------|------|------|
| $\gamma_a$ | 10° | 5° | 5° |
| $\alpha_r$ | 13° | 10° | 10° |
| $\alpha_{fp}$ | 8° | 13° | 13° |
| $\alpha_{fc}$ | 13° | 15° | 15° |

(a = axial ; r = radial ; fp = frontal-plaquette et fc = frontal-corps)

Bien entendu, en fonction des applications prévues, d'autres diamètres et d'autres angles sont possibles, l'angle de coupe radial effectif pouvant varier sur la fraise entre −10° et+35° (sauf zéro), de préférence de 1° à 25°.

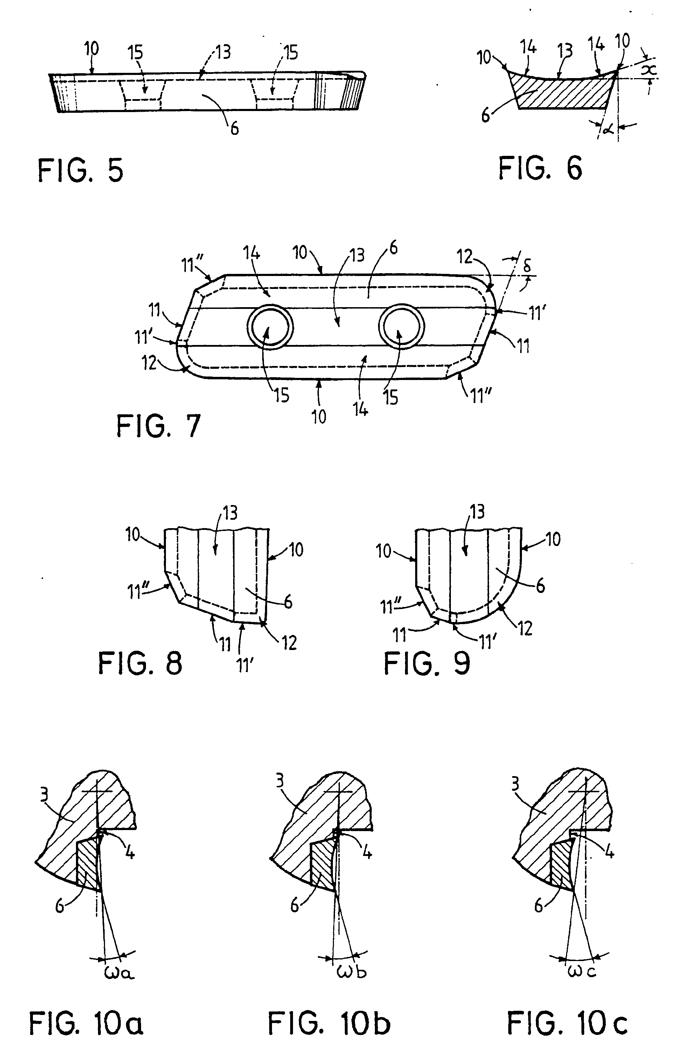

Les figures 5 à 7 illustrent à titre d'exemple une plaquette de coupe 6 utilisable avec le corps de fraise 1 décrit en référence aux figures 1 à 4. Cette plaquette 6 présente deux arêtes de coupe principales ou périphériques 10, légèrement incurvées vers l'extérieur, des arêtes de coupe secondaires 11, 11′, 11″ et deux portions de pointe 12. La forme générale de la plaquette est celle d'un parallèlogramme, avec des angles de pointe δ entre 40 et 90°, selon le diamètre de la fraise et compte tenu de l'angle de pénétration φ souhaité ; ici l'angle de pointe est de l'ordre de 70°. La configuration de la portion de pointe et des arêtes de coupe secondaires peut varier comme illustré à titre d'exemple sur les figures 8 et 9.

La plaquette de coupe 6, telle qu'illustrée sur les figures 5 à 7, présente un brise-copeaux traversant constitué par une dépression longitudinale ouverte 13 raccordée aux arêtes de coupe principales 10 par une pente 14 à inclinaison constante, ici avec un angle x d'environ 12°. En outre, l'angle de dépouille α varie le long des arêtes de coupe 10, de manière que cette dépouille soit constante sur la fraise, compte tenu de l'angle d'hélice $\gamma_a$. Cet angle de dépouille est généralement compris entre 5 et 20°.

Compte tenu de ce qui précède, l'angle de coupe, qui est donc constant sur la plaquette elle-même, varie effectivement sur la fraise le long de l'axe longitudinal de celle-ci, comme représenté sur les figures 10a, 10b et 10c, qui sont des coupes partielles le long des lignes respectivement a, b et c de la figure 4. On constate ainsi que l'angle de coupe effectif de la fraise diminue en direction de l'extrémité du corps de fraise 3, de $\omega_a$ à $\omega_b$ et à $\omega_c$. En pratique, cet angle peut varier de −10° à+35°(sauf zéro), de préférence de 1° à 25°.

Enfin, les deux arêtes de coupe principales 10 et leur face de dépouille sont légèrement incurvées vers l'extérieur (bombées) pour éviter, toujours compte tenu de l'angle d'hélice $\gamma_a$, le défaut géométrique des pièces usinées dû à la position axiale positive de la plaquette de coupe sur la fraise, donc pour assurer une parfaite planéité à la surface fraisée.

Pour permettre sa fixation sur le corps de fraise 1, chaque plaquette de coupe est percée d'un ou plusieurs orifices 15, ici deux, à paroi partiellement conique (figure 5), destinés à recevoir une ou plusieurs vis de fixation, ici deux vis 8 (figures 1 et 2).

Par rapport aux fraises connues à plaquettes de coupe brasées, la fraise à plaquettes de coupe amovibles selon l'invention présente notamment les avantages suivants :

– elle permet d'effectuer des travaux dits de "pocketing", c'est-à-dire avec pénétration dans la matière à usiner par la combinaison de son déplacement axial avec le mouvement de la pièce à usiner selon au moins un des axes de la table ;

– un seul et même corps de fraise peut recevoir un choix de plaquettes de coupe de différentes nuances selon la matière à usiner ; de même, des plaquettes de coupe ayant différents rayons et formes de pointes peuvent être utilisées en fonction de la forme de la pièce à usiner ;

– elle supprime les opérations de réaffûtage, qui sont généralement délicates et conduisent à une diminution du diamètre nominal ; et

– elle évite les réparations coûteuses en cas de casse accidentelle d'une plaquette, puisqu'il suffit alors de remplacer la plaquette défectueuse par une autre.

## Revendications

1. Fraise à plaquettes de coupe amovibles, qui comporte un corps (1) présentant au moins deux goujures (4, 5) comportant chacune un logement (4', 5') dont le fond fait avec l'axe longitudinal du corps un angle d'hélice non nul, dans chaque logement de laquelle est fixée de manière amovible une plaquette de coupe (6, 7) comportant une portion de pointe (12) débouchant sur la face frontale du corps et une arête de coupe principale (10) débordant le long du bord latéral externe de la goujure, et dans laquelle la position et la forme de cette plaquette sont telles que l'angle de coupe (ω) de la fraise varie en diminuant en direction de l'extrémité du corps, et que l'angle de dépouille (α) de la fraise soit constant.

2. Fraise selon la revendication 1, caractérisée par le fait que le corps comporte deux goujures avec un logement recevant chacun une plaquette de coupe amovible.

3. Fraise selon la revendication 1 ou la revendication 2, caractérisée par le fait que l'angle d'hélice (γ) est de 2 à 20°, de préférence de 5 à 10°.

4. Fraise selon l'une des revendications 1 à 3, caractérisée par le fait que l'angle de coupe radial (ω) varie de −10° à +35°, de préférence de 1 à 25°.

5. Fraise selon l'une des revendications 1 à 4, caractérisée par le fait que l'angle de dépouille de la plaquette est de 5 à 20° et que l'angle de pointe δ de la plaquette est de 40 à 90°.

6. Fraise selon l'une des revendications 1 à 5, caractérisée par le fait que le corps de fraise comporte un dégagement frontal (9), la forme et la dimension de ce dégagement étant telles que, compte tenu de l'angle de pointe des plaquettes de coupe, ils permettent un angle de pénétration (φ) dans la matière à usiner de 5 à 30°.

7. Fraise selon l'une des revendications 1 à 6, caractérisée par le fait que chaque plaquette de coupe est fixée de manière amovible sur le corps au moyen d'au moins une vis (8) coopérant avec au moins un orifice décentré pratiqué dans cette plaquette.

8. Plaquette de coupe destinée à être utilisée avec la fraise, selon la revendication 1 qui présente la forme générale d'un parallélogramme, les deux grands côtés formant deux arêtes de coupe principales (10) et les deux petits côtés comportant au moins une arête de coupe secondaire (11) et une portion de pointe (12), l'angle de pointe (δ) entre l'arête principale et l'arête secondaire est de 40 à 90°, et qui comporte un brise-copeaux (13) traversant constitué par une dépression longitudinale ouverte à ses extrémités et raccordée aux arêtes de coupe principales par une pente à inclinaison constante (14).

9. Plaquette selon la revendication 8, caractérisé par le fait que chaque petit côté comporte trois arêtes de coupe secondaires adjacentes (11, 11', 11''), entre la portion de pointe et une des arêtes de coupe principales.

10. Plaquette selon la revendication 8 ou la revendication 9, caractérisée par le fait que son angle de dépouille est de 5 à 20°, et qu'il varie le long de ses arêtes de coupe de telle sorte que la dépouille de la fraise soit constante lorsque la plaquette est fixée sur celle-ci.

11. Plaquette de coupe selon l'une des revendications 8 à 10, caractérisée par le fait que les arêtes de coupe principales sont incurvées vers l'extérieur.

## Ansprüche

1. Fräswerkzeug mit ersetzbaren Schneideeinsätzen, das einen Grundkörper (1) aufweist, der mit wenigstens zwei jeweils ein Lager (4', 5') enthaltenden Hinterschliffen (4, 5) versehen ist, wobei die Grundfläche eines jeden Lagers mit der Längsachse des Grundkörpers einen von Null verschiedenen Schrägungswinkel bildet, wobei in jedem Lager ersetzbar ein Schneideeinsatz (6, 7) befestigt ist, der einen in die Stirnseite des Grundkörpers hineingezogenen Spitzenbereich (12) und eine entlang der äußeren Seitenkante des Hinterschliffes überstehend Hauptschneide (10) aufweist, und wobei die Lage und die Form des Einsatzes derart sind, daß der Schnittwinkel (ω) des Fräswerkzeuges variiert, indem er in Richtung des Grundkörperendes abnimmt, und der Hinterschliffwinkel (α) des Fräswerkzeuges konstant bleibt.

2. Fräswerkzeug gemäß Anspruch 1, dadurch gekennzeichnet, daß der Grundkörper zwei jeweils ein Lager enthaltende Hinterschliffe aufweist, wobei jedes Lager einen ersetzbaren Schneideeinsatz aufnimmt.

3. Fräswerkzeug nach Anspruch 1 oder 2, dadurch gekennzeichnet, daß der Schrägungswinkel (γ) zwischen 2° und 20°, vorzugsweise zwischen 5° und 10°, beträgt.

4. Fräswerkzeug nach einem der Ansprüche 1 bis 3, dadurch gekennzeichnet, daß sich der radiale Schnittwinkel (ω) zwischen −10° und +35°, vorzugsweise zwischen 1° und 25°, ändert.

5. Fräswerkzeug nach einem der Ansprüche 1 bis 4, dadurch gekennzeichnet, daß der Hinterschliffwinkel des Einsatzes zwischen 5° und 20° und der Spitzenwinkel (δ) des Einsatzes zwischen 40° und 90° beträgt.

6. Fräswerkzeug nach einem der Ansprüche 1 bis 5, dadurch gekennzeichnet, daß der Grundkörper des Fräswerkzeuges einen stirnseitigen Vorsprung (9) aufweist, wobei die Form und die Abmessung des Vorsprungs derart sind, daß sie je nach Spitzenwinkel der Schneideeinsätze einen Eindringwinkel ($\varphi$) in das zu bearbeitende Material zwischen 5° und 30° erlauben.

7. Fräswerkzeug nach einem der Ansprüche 1 bis 6, dadurch gekennzeichnet, daß jeder Schneideeinsatz mittels wenigstens einer Schraube (8), die mit wenigstens einer zweckmäßig exzentrisch im Einsatz angeordneten Öffnung zusammenwirkt, ersetzbar befestigt ist.

8. Schneideeinsatz für die Verwendung in einem Fräswerkzeug nach Anspruch 1, welcher die allgemeine Form eines Parallelogramms hat, dessen zwei lange Seiten zwei Hauptschneiden (10) bilden und dessen zwei kurze Seiten wenigstens eine Nebenschneide (11) und einen Spitzenbereich (12) aufweisen, wobei der Spitzenwinkel ($\delta$) zwischen der Haupt- und der Nebenschneide zwischen 40° und 90° beträgt, und wobei im Schneideeinsatz ein querverlaufender Spanbrecher (13) vorgesehen ist, der von einer länglichen Vertiefung gebildet wird, die an ihren Enden offen und mit den Hauptschneiden durch eine eine konstante Neigung aufweisende Schrägung (14) verbunden ist.

9. Einsatz nach Anspruch 8, dadurch gekennzeichnet, daß jede kurze Seite drei benachbarte Nebhenschneiden (11, 11', 11'') aufweist, die zwischen dem Spitzenbereich und einer der Hauptschneiden angeordnet sind.

10. Einsatz nach Anspruch 8 oder 9, dadurch gekennzeichnet, daß sein Schnittwinkel zwischen 5° und 20° beträgt und sich entlang der entsprechenden Schneiden derart ändert, daß der Freiwinkel des Fräswerkzeuges konstant bleibt, wenn der Einsatz an diesem befestigt ist.

11. Schneideeinsatz nach einem der Ansprüche 8 bis 10, dadurch gekennzeichnet, daß die Hauptschneiden zur Außenseite hin gekrümmt sind.

## Claims

1. Milling cutter with removable cutting inserts, which comprises a body (1) having at least two indentations (4, 5) presenting each a housing (4', 5') whose bottom makes with the longitudinal axis of the body an helix angle not eaqual to zero, in each housing of which a cutting insert (6, 7) is fixed in a removable manner, which comprises a tip portion (12) emerging onto the frontal face of the body and a main cutting edge (10) extending beyond along the external lateral rim of the indentation, and in which the position and the shape of this insert are such that the cutting angle ($\omega$) of the milling cutter varies in decreasing towards the end of the body, and that the clearance angle ($\alpha$) of the milling cutter is constant.

2. Milling cutter according to claim 1, characterized by the fact that the body comprises two indentations with a housing receiving each an indexable cutting insert.

3. Milling cutter according to claim 1 or to claim 2, characterized by the fact that the helix angle ($\gamma$) is from 2 to 20°, preferably from 5 to 10°.

4. Milling cutter according to one of claims 1 to 3, characterized by the fact that the radial cutting angle ($\omega$) varies from −10° to+35°, preferably from 1 to 25°.

5. Milling cutter according to one of claims 1 to 4, characterized by the fact that the clearance angle of the insert is from 5 to 20° and that the included angle ($\delta$) of the insert is from 40 to 90°.

6. Milling cutter according to one of claims 1 to 5, characterized by the fact that the body of the milling cutter comprises a frontal clearance (9), the shape and size of this clearance being such that, taking account of the included angle of the cutting inserts, they allow a penetration angle ($\varphi$) into the material to be machined of 5 to 30°.

7. Milling cutter according to one of claims 1 to 6, characterized by the fact that each cutting insert is fixed in a removable manner on the body by means of at least one screw (8) cooperating with at least a decentered opening provided into the insert.

8. Cutting insert for use on the milling cutter according to claim 1, which has the general shape of a parallelogram, the two long sides forming two main cutting edges (10) and the two small sides comprising at least one secondary cutting edge (11) and a tip portion (12), the tip angle ($\delta$) between the main edge and the secondary edge is from 40 to 90°, and which comprises a traversing chipbreaker (13) constituted by a longitudinal depression opened at its ends and connected to the main edges by a slope (14) with a constant incline.

9. Cutting insert according to claim 8, characterized by the fact that each small side comprises three adjacent secondary cutting edges (11, 11', 11''), between the tip portion and one of the main cutting edges.

10. Cutting insert according to claim 8 or to claim 9, characterized by the fact that the clearance angle is of 5 to 20°, and that it varies along the cutting edges thereof so as the clearance on the milling cutter is constant when the insert is fixed thereon.

11. Cutting insert according to one of claims 8 to 10, characterized by the fact that the main cutting edges are outwardly curved.

FIG. 1

FIG. 2

FIG. 3

FIG. 4

FIG. 5

FIG. 6

FIG. 7

FIG. 8

FIG. 9

FIG. 10a

FIG. 10b

FIG. 10 c